(19) **Europäisches Patentamt**

**European Patent Office**

**Office européen des brevets**

(11) **EP 4 530 769 A1**

(12) **EUROPEAN PATENT APPLICATION**

(43) Date of publication:
**02.04.2025 Bulletin 2025/14**

(21) Application number: **24202735.7**

(22) Date of filing: **26.09.2024**

(51) International Patent Classification (IPC):
*G05B 19/042* (2006.01)     *G06F 8/35* (2018.01)
*G06N 20/00* (2019.01)     *G06Q 10/0633* (2023.01)

(52) Cooperative Patent Classification (CPC):
**G05B 19/0426; G06F 8/35; G06N 20/00;
G06Q 10/0633**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 US 202318476444**

(71) Applicant: **UiPath, Inc.
New York NY 10017 (US)**

(72) Inventors:
• **SCHEEPENS, Roeland Johannus
New York, 10017 (US)**
• **MENNENS, Robin Johannes Pieter
New York, 10017 (US)**
• **BRONS, Dennis
New York, 10017 (US)**

(74) Representative: **Ungria López, Javier
Avda. Ramón y Cajal, 78
28043 Madrid (ES)**

(54) **ACTIVITY MAPPING FOR PROCESS MINING USING LARGE LANGUAGE MODELS**

(57)     Systems and methods for determining a mapping between activities are provided. One or more prompts defining 1) instructions and 2) activities executed during one or more instances of execution of a process are received. A mapping between one or more activities extracted from a process model of the process and one or more of the activities executed during the one or more instances of execution is determined using a large language model based on the instructions. The mapping is output.

EP 4 530 769 A1

**Description**

FIELD

The present invention generally relates to process mining, and more specifically, to activity mapping for process mining using large language models.

BACKGROUND

Processes are sequences of activities executed to perform various tasks. In process mining, activities of a process model representing the expected execution of a process are mapped with activities extracted from an event log of the actual execution of the process to calculate various analytics. Conventionally, such mapping is manually performed, which is a time-consuming task and requires a high degree of knowledge and experience. Recently, similarity measures have been utilized to facilitate such mapping. However, such similarity measures measure the similarity between labels of the activities and are not able to consider the actual meaning of the activities. Accordingly, an improved and/or alternative approach may be beneficial.

SUMMARY

Certain embodiments of the present invention may provide alternatives or solutions to the problems and needs in the art that have not yet been fully identified, appreciated, or solved by current process mining technologies. For example, some embodiments of the present invention pertain to activity mapping for process mining using large language models.
In one embodiment, systems and methods for determining a mapping between activities are provided. One or more prompts defining 1) instructions and 2) activities executed during one or more instances of execution of a process are received. A mapping between one or more activities extracted from a process model of the process and one or more of the activities executed during the one or more instances of execution is determined using a large language model based on the instructions. The mapping is output.
In one embodiment, the one or more prompts further define a textual description of the process model of the process. The activities extracted from the process model are extracted using the large language model based on the textual description of the process model and the instructions. A definition of the process model may be translated to the textual description of the process model.
In one embodiment, the one or more prompts further define the activities extracted from the process model of the process.
In one embodiment, a one-to-one mapping between the one or more activities extracted from the process model and the one or more activities executed during the one or more instances of execution is determined. In another embodiment, at least one of a one-to-many mapping or a many-to-one mapping is determined between the one or more activities extracted from the process model and the one or more activities executed during the one or more instances of execution.
In one embodiment, determining a mapping comprises at least one of determining at least one of the activities extracted from the process model that do not map to at least one of the activities executed during the one or more instances of execution and determining at least one of the activities executed during the one or more instances of execution that do not map to at least one of the activities extracted from the process model.
In one embodiment, the process is an RPA (robotic process automation) workflow executed by one or more RPA robots.

BRIEF DESCRIPTION OF THE DRAWINGS

In order that the advantages of certain embodiments of the invention will be readily understood, a more particular description of the invention briefly described above will be rendered by reference to specific embodiments that are illustrated in the appended drawings. While it should be understood that these drawings depict only typical embodiments of the invention and are not therefore to be considered to be limiting of its scope, the invention will be described and explained with additional specificity and detail through the use of the accompanying drawings, in which:

FIG. 1 is an architectural diagram illustrating a computing system, which may be used to implement embodiments of the present invention.

FIG. 2A illustrates an example of a neural network that has been trained to recognize graphical elements in an image, according to an embodiment of the present invention.

FIG. 2B illustrates an example of a neuron, according to an embodiment of the present invention.

FIG. 3 is a flowchart illustrating a process for training AI/ML model(s), according to an embodiment of the present invention.

FIG. 4 shows an exemplary process graph on which embodiments of the present invention may be performed.

FIG. 5 shows a method for determining a mapping between activities extracted from a process model and executed activities using a large language model, in accordance with one or more embodiments.

FIG. 6 shows an interface by which a user interacts with a large language model via one or more prompts comprising instructions to extract activities from a process model, in accordance with one or more embodiments.

FIG. 7 shows an interface by which a user interacts with a large language model via one or more prompts for determining a mapping between the activities extracted from the process model and the activities executed during the one or more instances of execution, in accordance with one or more embodiments.

FIG. 8 shows an example of a textual description of a process model, according to an embodiment of the present invention.

FIG. 9 shows an interface by which a large language model outputs activities extracted from a process model, in accordance with one or more embodiments.

FIG. 10 shows an interface by which a large language model outputs a one-to-many mapping between the activities extracted from the process model and the activities executed during the one or more instances of execution, in accordance with one or more embodiments.

FIG. 11 shows an interface by which a large language model outputs a one-to-one mapping between the activities extracted from the process model and the activities executed during the one or more instances of execution, in accordance with one or more embodiments.

FIG. 12 shows an interface by which a large language model outputs a one-to-one mapping between the activities extracted from the process model and the activities executed during the one or more instances of execution, in accordance with one or more embodiments.

Unless otherwise indicated, similar reference characters denote corresponding features consistently throughout the attached drawings.

## DETAILED DESCRIPTION OF THE EMBODIMENTS

Some embodiments pertain to activity mapping for process mining using large language models.

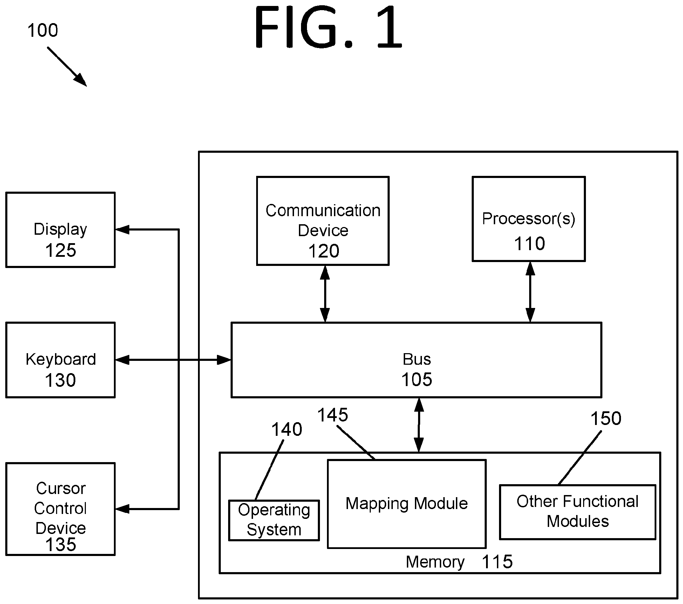

FIG. 1 is an architectural diagram illustrating a computing system 100 configured to implement systems, methods, workflows, and processes described herein. In some embodiments, computing system 100 may be one or more of the computing systems depicted and/or described herein. In certain embodiments, computing system 100 may be part of a hyper-automation system. Computing system 100 includes a bus 105 or other communication mechanism for communicating information, and processor(s) 110 coupled to bus 105 for processing information. Processor(s) 110 may be any type of general or specific purpose processor, including a Central Processing Unit (CPU), an Application Specific Integrated Circuit (ASIC), a Field Programmable Gate Array (FPGA), a Graphics Processing Unit (GPU), multiple instances thereof, and/or any combination thereof. Processor(s) 110 may also have multiple processing cores, and at least some of the cores may be configured to perform specific functions. Multi-parallel processing may be used in some embodiments. In certain embodiments, at least one of processor(s) 110 may be a neuromorphic circuit that includes processing elements that mimic biological neurons. In some embodiments, neuromorphic circuits may not require the typical components of a Von Neumann computing architecture.

Computing system 100 further includes a memory 115 for storing information and instructions to be executed by processor(s) 110. Memory 115 can be comprised of any combination of random access memory (RAM), read-only memory (ROM), flash memory, cache, static storage such as a magnetic or optical disk, or any other types of non-transitory computer-readable media or combinations thereof. Non-transitory computer-readable media may be any available media that can be accessed by processor(s) 110 and may include volatile media, non-volatile media, or both. The media may also be removable, non-removable, or both. Computing system 100 includes a communication device 120, such as a transceiver, to provide access to a communications network via a wireless and/or wired connection. In some embodiments, communication device 120 may include one or more antennas that are singular, arrayed, phased, switched, beamforming, beamsteering, a combination thereof, and or any other antenna configuration without deviating from the scope of the invention.

Processor(s) 110 are further coupled via bus 105 to a display 125. Any suitable display device and haptic I/O may be used without deviating from the scope of the invention.

A keyboard 130 and a cursor control device 135, such as a computer mouse, a touchpad, etc., are further coupled to bus 105 to enable a user to interface with computing system 100. However, in certain embodiments, a physical keyboard and mouse may not be present, and the user may interact with the device solely through display 125 and/or a touchpad (not shown). Any type and combination of input devices may be used as a matter of design choice. In certain embodiments, no physical input device and/or display is present. For instance, the user may interact with computing system 100 remotely via another computing system in communication therewith, or computing system 100 may operate autonomously.

Memory 115 stores software modules that provide functionality when executed by processor(s) 110. The modules include an operating system 140 for computing system 100. The modules further include a mapping module 145 that is configured to perform all or part of the processes described herein or derivatives thereof. Computing system 100 may include one or more additional functional modules 150 that include additional functionality.

One skilled in the art will appreciate that a "computing system" could be embodied as a server, an embedded computing system, a personal computer, a console, a personal digital assistant (PDA), a cell phone, a tablet computing device, a quantum computing system, or any other suitable computing device, or combination of devices without deviating from the scope of the invention. Presenting the above-described functions as being performed by a "system" is not intended to limit the scope of the present invention in any way, but is intended to provide one example of the many embodiments of the present invention. Indeed, methods, systems, and apparatuses disclosed herein may be implemented in localized and distributed forms consistent with computing technology, including cloud computing systems. The computing system could be part of or otherwise accessible by a local area network (LAN), a mobile communications network, a satellite communications network, the Internet, a public or private cloud, a hybrid cloud, a server farm, any combination thereof, etc. Any localized or distributed architecture may be used without deviating from the scope of the invention.

It should be noted that some of the system features described in this specification have been presented as modules, in order to more particularly emphasize their implementation independence. For example, a module may be implemented as a hardware circuit comprising custom very large scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices, graphics processing units, or the like.

A module may also be at least partially implemented in software for execution by various types of processors. An identified unit of executable code may, for instance, include one or more physical or logical blocks of computer instructions that may, for instance, be organized as an object, procedure, or function. Nevertheless, the executables of an identified module need not be physically located together, but may include disparate instructions stored in different locations that, when joined logically together, comprise the module and achieve the stated purpose for the module. Further, modules may be stored on a computer-readable medium, which may be, for instance, a hard disk drive, flash device, RAM, tape, and/or any other such non-transitory computer-readable medium used to store data without deviating from the scope of the invention.

Indeed, a module of executable code could be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network.

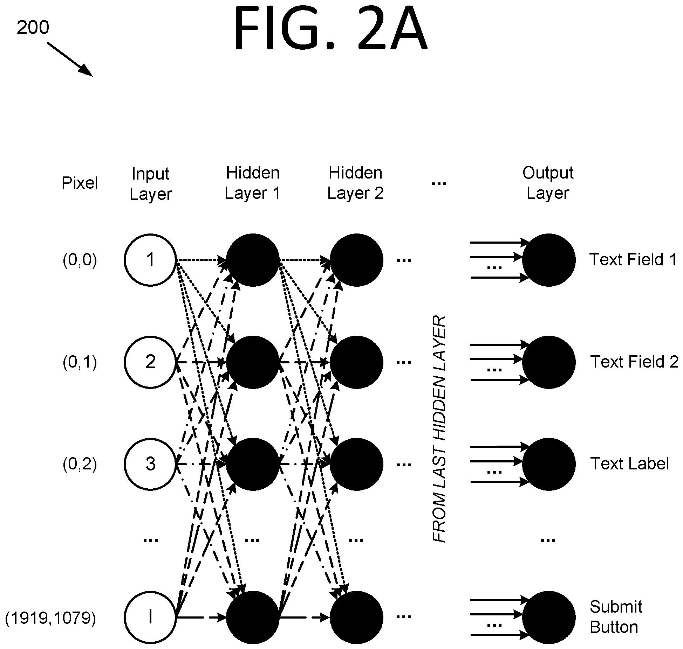

Various types of AI/ML (artificial intelligence/machine learning) models may be trained and deployed for performing one or more embodiments described herein. For instance, FIG. 2A illustrates an example of a neural network 200 that has been trained to recognize graphical elements in an image. Here, neural network 200 receives pixels of a screenshot image of a 1920 × 1080 screen as input for input "neurons" 1 to I of the input layer. In this case, I is 2,073,600, which is the total number of pixels in the screenshot image.

Neural network 200 also includes a number of hidden layers. Both DLNNs and shallow learning neural networks (SLNNs) usually have multiple layers, although SLNNs may only have one or two layers in some cases, and normally fewer than DLNNs. Typically, the neural network architecture includes an input layer, multiple intermediate layers, and an output layer, as is the case in neural network 200.

A DLNN often has many layers (e.g., 10, 50, 200, etc.) and subsequent layers typically reuse features from previous layers to compute more complex, general functions. A SLNN, on the other hand, tends to have only a few layers and train relatively quickly since expert features are created from raw data samples in advance. However, feature extraction is laborious. DLNNs, on the other hand, usually do not require expert features, but tend to take longer to train and have more layers.

For both approaches, the layers are trained simultaneously on the training set, normally checking for overfitting on an isolated cross-validation set. Both techniques can yield excellent results, and there is considerable enthusiasm for both approaches. The optimal size, shape, and quantity of individual layers varies depending on the problem that is addressed by the respective neural network.

Returning to FIG. 2A, pixels provided as the input layer are fed as inputs to the J neurons of hidden layer 1. While all pixels are fed to each neuron in this example, various architectures are possible that may be used individually or in combination including, but not limited to, feed forward networks, radial basis networks, deep feed forward networks, deep convolutional inverse graphics networks, convolutional neural networks, recurrent neural networks, artificial neural networks, long/short term memory networks, gated recurrent unit networks, generative adversarial networks, liquid state machines, auto encoders, variational auto encoders, denoising auto encoders, sparse auto encoders, extreme learning machines, echo state networks, Markov chains, Hopfield networks, Boltzmann machines, restricted Boltzmann machines, deep residual networks, Kohonen networks, deep belief networks, deep convolutional networks, support vector machines, neural Turing machines, or any other suitable type or combination of neural networks without deviating from the scope of the invention.

Hidden layer 2 receives inputs from hidden layer 1, hidden layer 3 receives inputs from hidden layer 2, and so on for all hidden layers until the last hidden layer provides its outputs as inputs for the output layer. It should be noted that numbers of neurons I, J, K, and L are not necessarily equal, and thus, any desired number of layers may be used for a given layer of neural network 200 without deviating from the scope of the invention. Indeed, in certain embodiments, the types of neurons in a given layer may not all be the same.

Neural network 200 is trained to assign a confidence score to graphical elements believed to have been found in the image. In order to reduce matches with unacceptably low likelihoods, only those results with a confidence score that meets or exceeds a confidence threshold may be provided in some embodiments. For instance, if the confidence threshold is 80%, outputs with confidence scores exceeding this amount may be used and the rest may be ignored. In this case, the output layer indicates that two text fields, a text label, and a submit button were found. Neural network 200 may provide the locations, dimensions, images, and/or confidence scores for these elements without deviating from the scope of the invention, which can be used subsequently by an RPA robot or another process that uses this output for a given purpose.

It should be noted that neural networks are probabilistic constructs that typically have a confidence score. This may be a score learned by the AI/ML model based on how often a similar input was correctly identified during training. For instance, text fields often have a rectangular shape and a white background. The neural network may learn to identify graphical elements with these characteristics with a high confidence. Some common types of confidence scores include a decimal number between 0 and 1 (which can be interpreted as a percentage of confidence), a number between negative $\infty$ and positive $\infty$, or a set of expressions (e.g., "low," "medium," and "high"). Various post-processing calibration techniques may also be employed in an attempt to obtain a more accurate confidence score, such as temperature scaling, batch normalization, weight decay, negative log likelihood (NLL), etc.

"Neurons" in a neural network are mathematical functions that that are typically based on the functioning of a biological neuron. Neurons receive weighted input and have a summation and an activation function that governs whether they pass output to the next layer. This activation function may be a nonlinear thresholded activity function where nothing happens if the value is below a threshold, but then the function linearly responds above the threshold (i.e., a rectified linear unit (ReLU) nonlinearity). Summation functions and ReLU functions are used in deep learning since real neurons can have approximately similar activity functions. Via linear transforms, information can be subtracted, added, etc. In essence, neurons act as gating functions that pass output to the next layer as governed by their underlying mathematical function. In some embodiments, different functions may be used for at least some neurons.

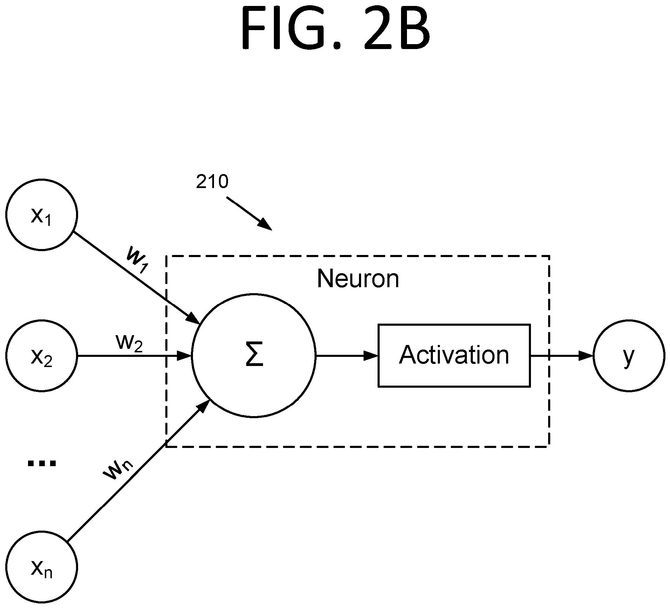

An example of a neuron 210 is shown in FIG. 2B. Inputs $x_1, x_2, ..., x_n$ from a preceding layer are assigned respective weights $w_1, w_2, ..., w_n$. Thus, the collective input from preceding neuron 1 is $w_1x_1$. These weighted inputs are used for the neuron's summation function modified by a bias, such as:

$$\sum_{i=1}^{m}(w_ix_i) + bias \quad (1)$$

This summation is compared against an activation function $f(x)$ to determine whether the neuron "fires". For instance, $f(x)$ may be given by:

$$f(x) = \begin{cases} 1 \text{ if } \sum wx + bias \geq 0 \\ 0 \text{ if } \sum wx + bias < 0 \end{cases} \quad (2)$$

The output $y$ of neuron 210 may thus be given by:

$$y = f(x) \sum_{i=1}^{m} (w_i x_i) + bias \quad (3)$$

In this case, neuron 210 is a single-layer perceptron. However, any suitable neuron type or combination of neuron types may be used without deviating from the scope of the invention. It should also be noted that the ranges of values of the weights and/or the output value(s) of the activation function may differ in some embodiments without deviating from the scope of the invention.

The goal, or "reward function" is often employed, such as for this case the successful identification of graphical elements in the image. A reward function explores intermediate transitions and steps with both short-term and long-term rewards to guide the search of a state space and attempt to achieve a goal (e.g., successful identification of graphical elements, successful identification of a next sequence of activities for an RPA workflow, etc.).

During training, various labeled data (in this case, images) are fed through neural network 200. Successful identifications strengthen weights for inputs to neurons, whereas unsuccessful identifications weaken them. A cost function, such as mean square error (MSE) or gradient descent may be used to punish predictions that are slightly wrong much less than predictions that are very wrong. If the performance of the AI/ML model is not improving after a certain number of training iterations, a data scientist may modify the reward function, provide indications of where non-identified graphical elements are, provide corrections of misidentified graphical elements, etc.

Backpropagation is a technique for optimizing synaptic weights in a feedforward neural network. Backpropagation may be used to "pop the hood" on the hidden layers of the neural network to see how much of the loss every node is responsible for, and subsequently updating the weights in such a way that minimizes the loss by giving the nodes with higher error rates lower weights, and vice versa. In other words, backpropagation allows data scientists to repeatedly adjust the weights so as to minimize the difference between actual output and desired output.

The backpropagation algorithm is mathematically founded in optimization theory. In supervised learning, training data with a known output is passed through the neural network and error is computed with a cost function from known target output, which gives the error for backpropagation. Error is computed at the output, and this error is transformed into corrections for network weights that will minimize the error.

In the case of supervised learning, an example of backpropagation is provided below. A column vector input $x$ is processed through a series of $N$ nonlinear activity functions $f_i$ between each layer $i$ = 1, ..., $N$ of the network, with the output at a given layer first multiplied by a synaptic matrix $W_i$, and with a bias vector $b_i$ added. The network output o, given by

$$o = f_N(W_N f_{N-1}(W_{N-1} f_{N-2}(... f_1(W_1 x + b_1) ...) + b_{N-1}) + b_N) \quad (4)$$

In some embodiments, $o$ is compared with a target output t, resulting in an error $E = \frac{1}{2}\|o - t\|^2$, which is desired to be minimized.

Optimization in the form of a gradient descent procedure may be used to minimize the error by modifying the synaptic weights $W_i$ for each layer. The gradient descent procedure requires the computation of the output o given an input $x$ corresponding to a known target output $t$, and producing an *error o - t*. This global error is then propagated backwards giving local errors for weight updates with computations similar to, but not exactly the same as, those used for forward propagation. In particular, the backpropagation step typically requires an activity function of the form $p_j(n_j) = f'_j(n_j)$, where $n_j$ is the network activity at layer $j$ (i.e., $n_j = W_j o_{j-1} + b_j$) where $o_j = f_j(n_j)$ and the apostrophe ' denotes the derivative of the activity function f.

The weight updates may be computed via the formulae:

$$d_j = \begin{cases} (o - t) \circ p_j(n_j), & j = N \\ W_{j+1}^{\mathrm{T}} d_{j+1} \circ p_j(n_j), & j < N \end{cases} \quad (5)$$

$$\frac{\partial E}{\partial W_{j+1}} = d_{j+1}(o_j)^{\mathrm{T}} \quad (6)$$

$$\frac{\partial E}{\partial b_{j+1}} = d_{j+1} \quad (7)$$

$$W_j^{\mathrm{new}} = W_j^{\mathrm{old}} - \eta \frac{\partial E}{\partial W_j} \quad (8)$$

$$b_j^{\mathrm{new}} = b_j^{\mathrm{old}} - \eta \frac{\partial E}{\partial b_j} \quad (9)$$

where $\circ$ denotes a Hadamard product (i.e., the element-wise product of two vectors), $^{\mathrm{T}}$ denotes the matrix transpose, and $o_j$ denotes $f_j(W_j o_{j-1} + b_j)$, with $o_0 = x$. Here, the learning rate $\eta$ is chosen with respect to machine learning considerations. Below, $\eta$ is related to the neural Hebbian learning mechanism used in the neural implementation. Note that the synapses $W$ and $b$ can be combined into one large synaptic matrix, where it is assumed that the input vector has appended ones, and extra columns representing the $b$ synapses are subsumed to $W$.

The AI/ML model may be trained over multiple epochs until it reaches a good level of accuracy (e.g., 97% or better using an F2 or F4 threshold for detection and approximately 2,000 epochs). This accuracy level may be determined in some embodiments using an F1 score, an F2 score, an F4 score, or any other suitable technique without deviating from the scope of the invention. Once trained on the training data, the AI/ML model may be tested on a set of evaluation data that the AI/ML model has not encountered before. This helps to ensure that the AI/ML model is not "over fit" such that it identifies graphical elements in the training data well, but does not generalize well to other images.

In some embodiments, it may not be known what accuracy level is possible for the AI/ML model to achieve. Accordingly, if the accuracy of the AI/ML model is starting to drop when analyzing the evaluation data (i.e., the model is performing well on the training data, but is starting to perform less well on the evaluation data), the AI/ML model may go through more epochs of training on the training data (and/or new training data). In some embodiments, the AI/ML model is only deployed if the accuracy reaches a certain level or if the accuracy of the trained AI/ML model is superior to an existing deployed AI/ML model.

In certain embodiments, a collection of trained AI/ML models may be used to accomplish a task, such as employing an AI/ML model for each type of graphical element of interest, employing an AI/ML model to perform OCR, deploying yet another AI/ML model to recognize proximity relationships between graphical elements, employing still another AI/ML model to generate an RPA workflow based on the outputs from the other AI/ML models, etc. This may collectively allow the AI/ML models to enable semantic automation, for instance.

Some embodiments may use transformer networks such as SentenceTransformers™, which is a Python™ framework for state-of-the-art sentence, text, and image embeddings. Such transformer networks learn associations of words and phrases that have both high scores and low scores. This trains the AI/ML model to determine what is close to the input and what is not, respectively. Rather than just using pairs of words/phrases, transformer networks may use the field length and field type, as well.

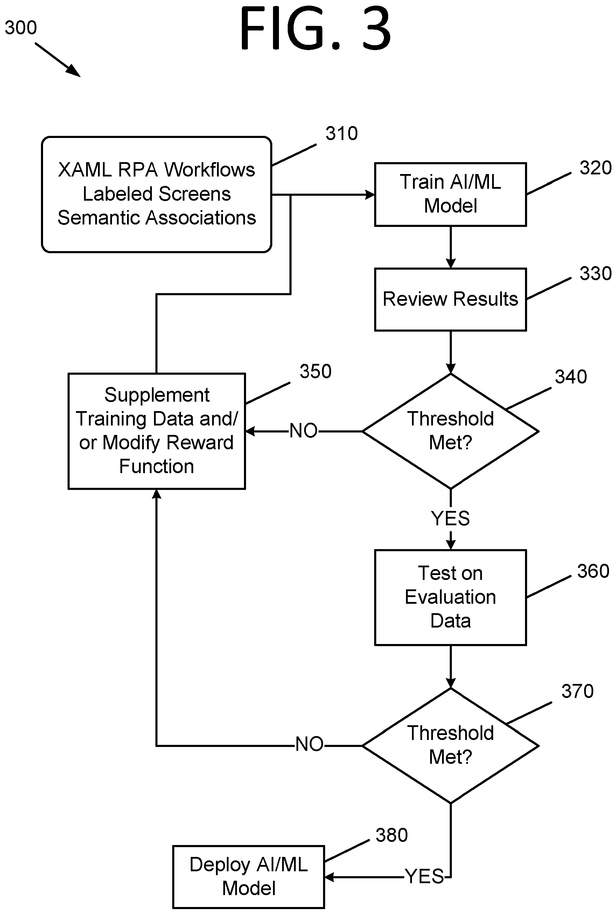

FIG. 3 is a flowchart illustrating a process 300 for training AI/ML model(s), according to an embodiment of the present invention. The process begins with providing training data, for instance, labeled data as shown in FIG. 3, such as labeled screens (e.g., with graphical elements and text identified), words and phrases, a "thesaurus" of semantic associations between words and phrases such that similar words and phrases for a given word or phrase can be identified, etc. at 310. The nature of the training data that is provided will depend on the objective that the AI/ML model is intended to achieve. The AI/ML model is then trained over multiple epochs at 320 and results are reviewed at 330.

If the AI/ML model fails to meet a desired confidence threshold at 340, the training data is supplemented and/or the reward function is modified to help the AI/ML model achieve its objectives better at 350 and the process returns to step 320. If the AI/ML model meets the confidence threshold at 340, the AI/ML model is tested on evaluation data at 360 to ensure that the AI/ML model generalizes well and that the AI/ML model is not over fit with respect to the training data. The evaluation data may include screens, source data, etc. that the AI/ML model has not processed before. If the confidence threshold is met at 370 for the evaluation data, the AI/ML model is deployed at 380. If not, the process returns to step 350 and the AI/ML model is trained further.

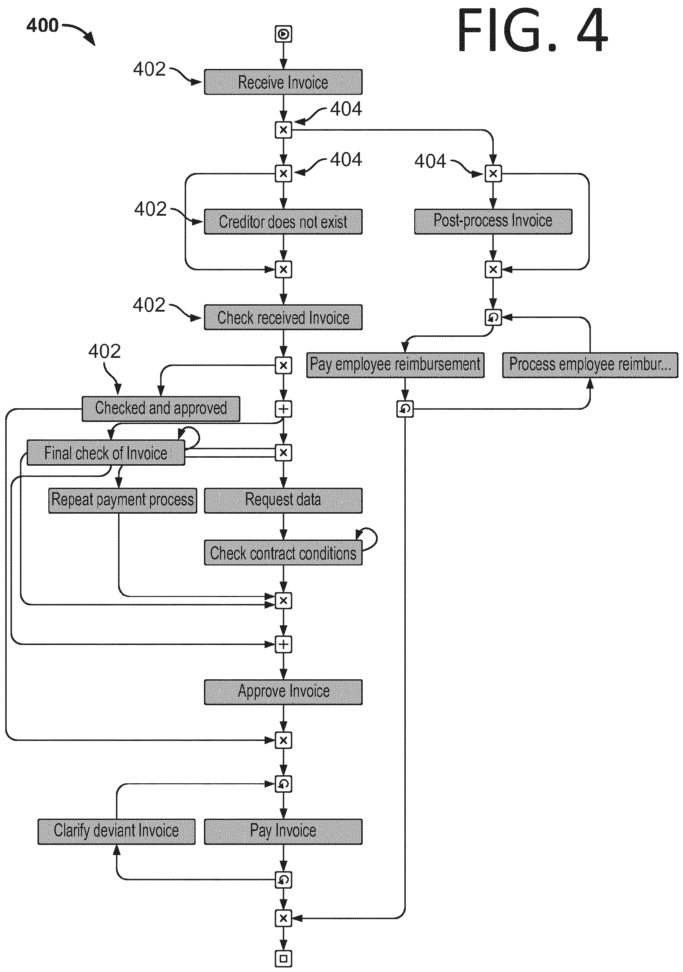

Processes comprise a sequence of activities to perform various tasks for a number of different applications, such as, e.g., administrative applications (e.g., onboarding a new employee), procure-to-pay applications (e.g., purchasing, invoice management, and facilitating payment), and information technology applications (e.g., ticketing systems). An exemplary process graph (or process model) 400 is shown in FIG. 4. Process graph 400 may be a computer process automatically or semi-automatically executed by one or more computing devices (e.g., computing system 100 of FIG. 1). In one embodiment, process graph 400 may be implemented as a robotic process automation (RPA) workflow for automatically or semi-automatically performing a task using one or more RPA robots executing on one or more computing devices (e.g., computing system 100 of FIG. 1).

Process graph 400 comprises activities 402, which represent predefined sequences of steps in process graph 400. As shown in FIG. 4, process graph 400 is modeled as a directed graph where each activity 402 is represented as a node and each transition between activities 402 is represented as edges linking the nodes. The transition between activities 402 represents the execution of process graph 400 from a source activity to a destination activity. Process graph 400 comprises gateways 404 representing diversions in the process. Gateways 404 control how the process flows during execution. Gateways 404 may be, for example, exclusive gateways or parallel gateways and may split a single path into multiple paths or join multiple paths into a single path. Process graph 400 may be represented as a process tree, a BPMN (business process model and notation) model, or in any other suitable form.

Execution of process graph 400 is recorded in the form of an event log. Each instance of execution of process graph 400 corresponds to a case, identified by a case ID. Each case may have a number of attributes with corresponding values (referred to as attribute values). In one example, an attribute may be case type and attribute values may be services or catalog. In another example, an attribute may be supplier and attribute values may be the names of the suppliers.

In process mining, a mapping between activities of a process model representing the expected execution of a process and activities extracted from an event log of the actual execution of the process may be determined to calculate various analytics and perform other process mining tasks. Embodiments described herein utilize a large language model to process a textual description of the process model and provide intelligent mapping suggestions. As a result, a user may be informed of activities extracted from the event log that do not properly correspond to activities of the process model, along with a suggested mapping. This provides actionable results for the user, using the mapping as a guideline to transform the execution data or process model. Advantageously, embodiments described herein prevent unwanted comparison between activities, thus vastly increasing the power of model-data alignment techniques.

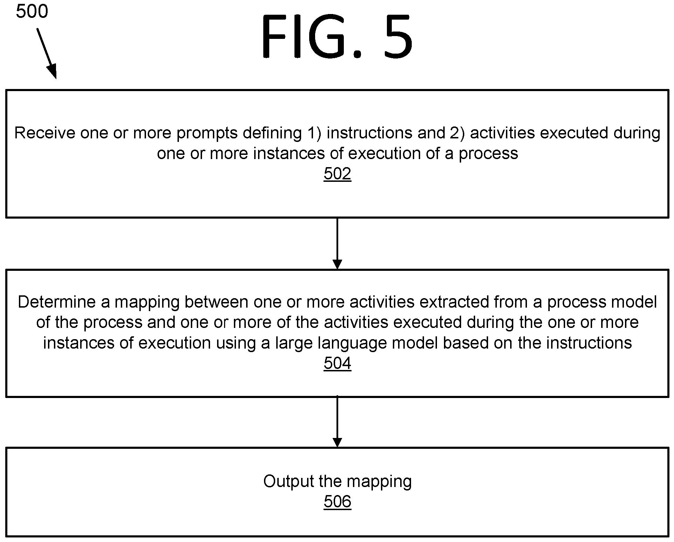

FIG. 5 shows a method 500 for determining a mapping between activities extracted from a process model and executed activities using a large language model, in accordance with one or more embodiments. The steps and sub-steps of method 500 may be performed by one or more suitable computing devices, such as, e.g., computing system 100 of FIG. 1. As used herein, activities extracted from the process model representing the expected execution of the process are referred to as "user activities" and executed activities extracted from an event log of the actual execution of the process are referred to as "data activities."

At step 502 of FIG. 5, one or more prompts defining 1) instructions and 2) activities executed during one or more instances of execution of a process are received. A prompt refers to input text to a large language model for generating a response. A prompt is typically provided by a user to enable the user to interact with the large language model. The one or more prompts may be received from a computing device (e.g., computing system 100 of FIG. 1) with which a user is interacting.

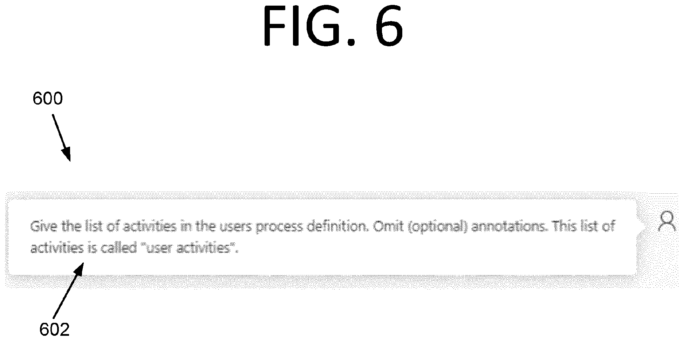

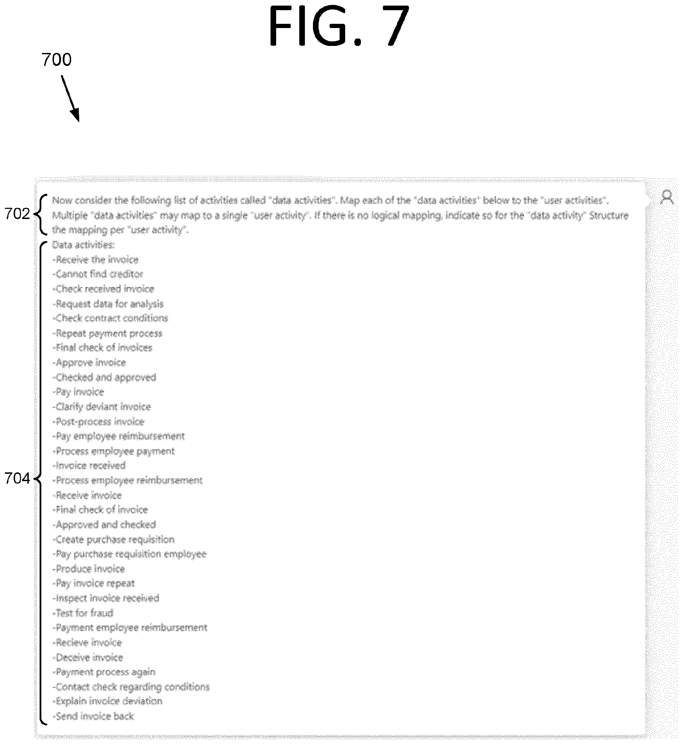

The instructions refer to guidelines or directions provided to guide the behavior and output of the large language model. The instructions may include, for example, commands, questions, constraints, requirements, contextual information, and/or any other guideline or direction guiding the behavior and output of the large language model. In one embodiment, the instructions defined in the one or more prompts comprise instructions to extract activities from the process model (as shown in FIG. 6) and/or instructions to determine a mapping between the activities extracted from the process model and the activities executed during the one or more instances of execution (as shown in FIG. 7).

FIG. 6 shows an interface 600 by which a user interacts with a large language model via one or more prompts comprising instructions to extract activities from a process model, in accordance with one or more embodiments. In interface 600, instructions 602 are submitted by a user and received by the large language model via one or more prompts. Instructions 602 are for extracting activities from a process model. In one example, instructions 602 may be the instructions for extracting activities from the process model received via the one or more prompts at step 502 of FIG. 5.

FIG. 7 shows an interface 700 by which a user interacts with a large language model via one or more prompts for determining a mapping between the activities extracted from the process model and the activities executed during the one or more instances of execution, in accordance with one or more embodiments. In interface 700, instructions 702 are submitted by a user and received by the large language model via one or more prompts. Instructions 702 are for determining a mapping between the activities extracted from the process model and the activities executed during the one or more instances of execution. In one example, instructions 702 may be the instructions for determining a mapping between the activities extracted from the process model and the activities executed during the one or more instances of execution received via the one or more prompts at step 502 of FIG. 5. Instructions 702 allow for a one-to-many mapping, whereby a single data activity may be mapped to multiple user activities (or vice versa), or a many-to-one mapping, wherein multiple data activities may be mapped to a single user activity (or vice versa). However, in some embodiment, the instructions 702 may require a one-to-one mapping, where only a single data activity may be mapped to a single user activity. FIG. 7 will be further described below.

Referring back to step 502 of FIG. 5, the process may be any suitable process comprising a sequence of activities. In some embodiments, prior to step 502 of FIG. 5, the process is executed by one or more suitable computing devices (e.g., computing system 100 of FIG. 1) for the one or more instances of execution. For example, the process may be a computer process automatically or semi-automatically executed by one or more computing devices (e.g., computing system 100 of FIG. 1) or an RPA workflow for automatically or semi-automatically performing a task using one or more RPA robots executing on one or more computing devices (e.g., computing system 100 of FIG. 1). In one example, the process is represented by process graph 400 of FIG. 4. The process model of the process represents the expected execution of the process. The process model of the process may be, for example, mined automatically using any suitable process mining technique or manually derived by a user from user process definitions (e.g., BPMN).

The activities executed during one or more instances of execution (also referred to as cases) of the process may be defined in the one or more prompts as a sequence of activities of the process executing during the one or more instances of execution. In one example, the activities executed during one or more instances of execution are defined in interface 700 of FIG. 7 as input activities 704. Input activities 704 may be manually identified from execution data (e.g., event logs) by a user or automatically identified from the execution data (e.g., by a computer program). Input activities 704 are submitted by a user and received by the large language model via one or more prompts.

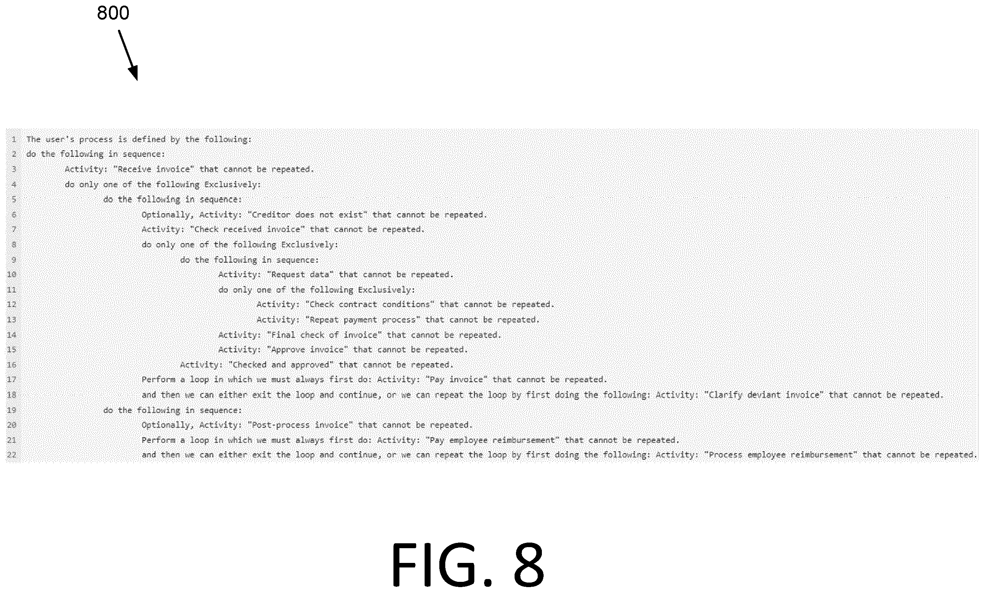

In one embodiment, the one or more prompts further define a textual description of the process model of the process. The textual description of the process may be represented in any suitable form. An example of the textual description of the process model is shown in FIG. 8, in accordance with one or more embodiments. FIG. 8 depicts an exemplary textual description 800 of a process model represented as a natural language representation. Textual description 800 may be generated by translating a raw representation (e.g., in JavaScript Object Notation, JSON) of the process model to a textual description.

A process tree is a tree-based representation of the process model, where the leaves are activities and the nodes are process operations: sequence (children happen in sequence), exclusive (only one of its children happens in one process execution), parallel (all children happen in parallel), or loop (the first child happens first and then the process returns by performing one of the other children). In one embodiment, the process tree is translated to a textual description by walking over the process tree and converting each sub-tree into text. Each line represents either a single activity (where we include whether it can be repeated or not) or a process operation that determines how the following operations with a higher indentation level are performed. The level of indentation determines the position in the process tree. A similar approach may be followed where the process model is represented as a BPMN (business process model and notation) model.

In one embodiment, the one or more prompts further define the activities extracted from the process model of the process. Activities extracted from the process model may be manually identified from the process model by a user or automatically identified from the process model (e.g., by the large language model or a computer program). The activities extracted from the process model are submitted by a user and received by the large language model via one or more prompts.

Referring back to FIG. 5, at step 504, a mapping between one or more activities extracted from a process model of the process and one or more of the activities extracted during the one or more instances of execution is determined using a large language model based on the instructions. In one embodiment, the mapping is determined in response to the instructions to determine a mapping between the activities extracted from the process model and the activities executed during the one or more instances of execution. The mapping provides for actional results for the user, using the mappings as a guide to transform the data or the process model.

In one embodiment, for example where the one or more prompts further define the textual description of the process model of the process, the activities extracted from the process model are first extracted using the large language model based on the textual description of the process model and the instructions. The large language model receives as input the one or more prompts comprising the instructions to extract activities from a process model and the textual description and generates as output the extracted activities. The activities extracted from the process model are represented by the large language model extracting the activities from the textual description of the process model.

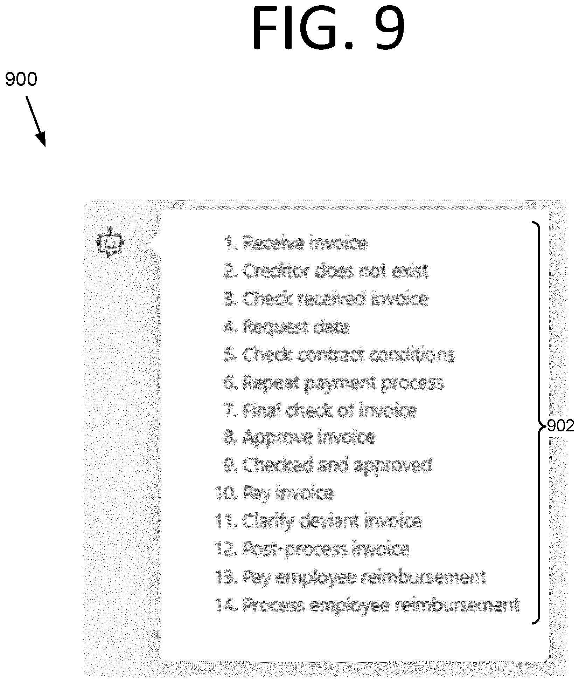

FIG. 9 shows an interface 900 by which a large language model outputs activities extracted from a process model, in accordance with one or more embodiments. In interface 900, the large language model outputs extracted activities 902 extracted from textual description 800 of FIG. 8 in response to instruction 600 of FIG. 6. In one example, extracted activities 902 are the activities extracted at step 504 of FIG. 5.

The large language model then extracts the activities extracted from the process model based on the textual description and the instructions. The large language model receives as input the one or more prompts comprising the instructions to determine a mapping between the activities extracted from the process model and the activities executed during the one or more instances of execution of the process and generates as output the mapping.

In one embodiment, for example where the one or more prompts further define the activities extracted from the process model of the process, the mapping is performed by the large language model receiving as input the one or more prompts comprising the instructions to determine a mapping between the activities extracted from the process model, the activities executed during the one or more instances of execution of the process, and the activities extracted from the process model and generates as output the mapping.

A large language model is a deep learning model trained to, e.g., recognize, summarize, translate, predict, and generate content based on a very large training dataset. The large language model may be any suitable pre-trained deep learning based large language model. For example, the large language model may be based on the transformer architecture, which uses a self-attention mechanism to capture long-range dependencies in text. Examples of transformer-based large language models include GPT (generative pre-training transformer), BLOOM (BigScience Large Open-science Open-access Multilingual Language Model), BERT (Bidirectional Encoder Representations from Transfers), LaMDA (language model for dialogue applications), and Llama (large language model Meta AI). In one embodiment, the large language model is fine-tuned for process mining.

In one embodiment, the large language model determines that at least one of the activities extracted from the process model do not map to at least one of the activities executed during the one or more instances of execution and/or that at least one of the activities executed during the one or more instances of execution do not map to at least one of the activities extracted from the process model.

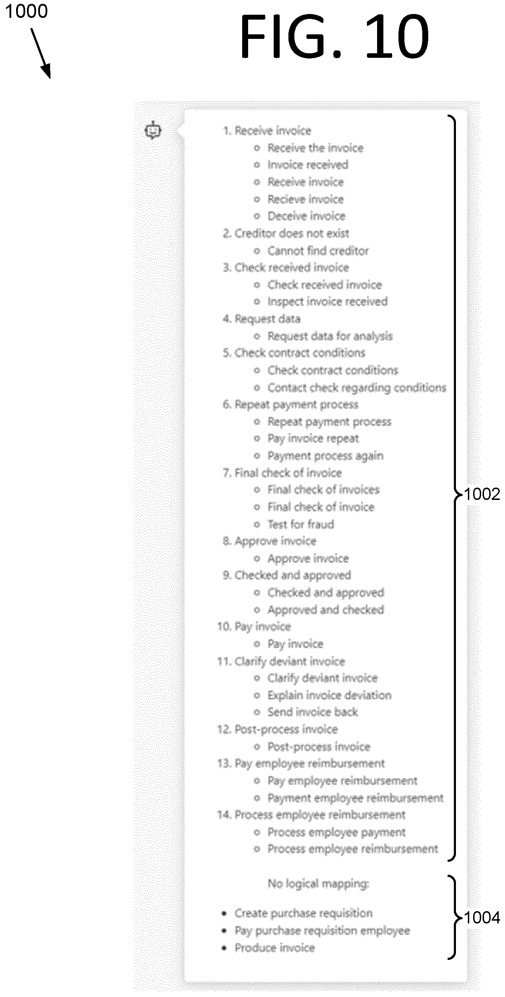

Exemplary mappings are shown in FIGS. 10-12. FIG. 10 shows an interface 1000 by which a large language model outputs a one-to-many mapping between the user activities extracted from the process model and the data activities executed during the one or more instances of execution, in accordance with one or more embodiments. Mapping 1002 is a one-to-many mapping whereby a single data executed activity extracted from an event log is mapped to multiple user activities extracted from the process model. It should be understood that, in some embodiments, the one-to-many mapping may comprise a single user activity mapped to multiple data activities. Indication 1004 indicates that no logical mappings are found for certain activities (e.g., for data activities or user activities).

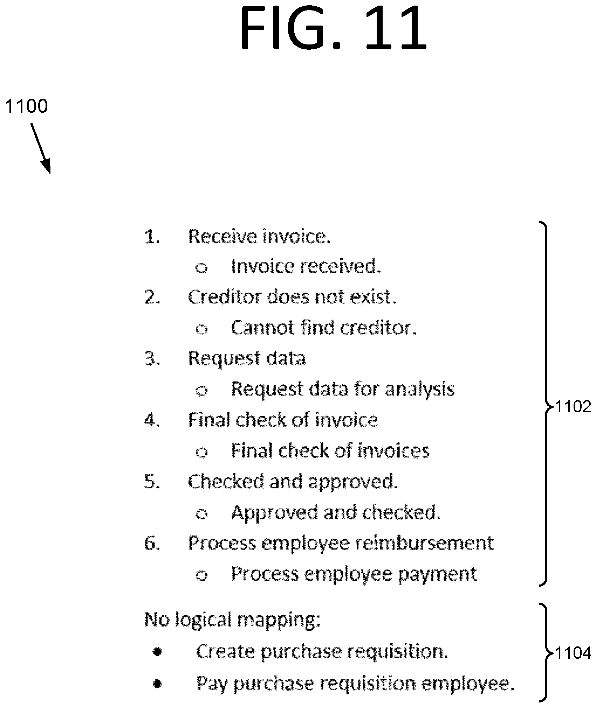

FIG. 11 shows an interface 1100 by which a large language model outputs a one-to-one mapping between the activities extracted from the process model and the activities executed during the one or more instances of execution, in accordance with one or more embodiments. Mapping 1102 is a one-to-one mapping whereby a single executed activity extracted from an event log is mapped to a single activity extracted from the process model. Indication 1104 indicates that no logical mappings are found for certain activities.

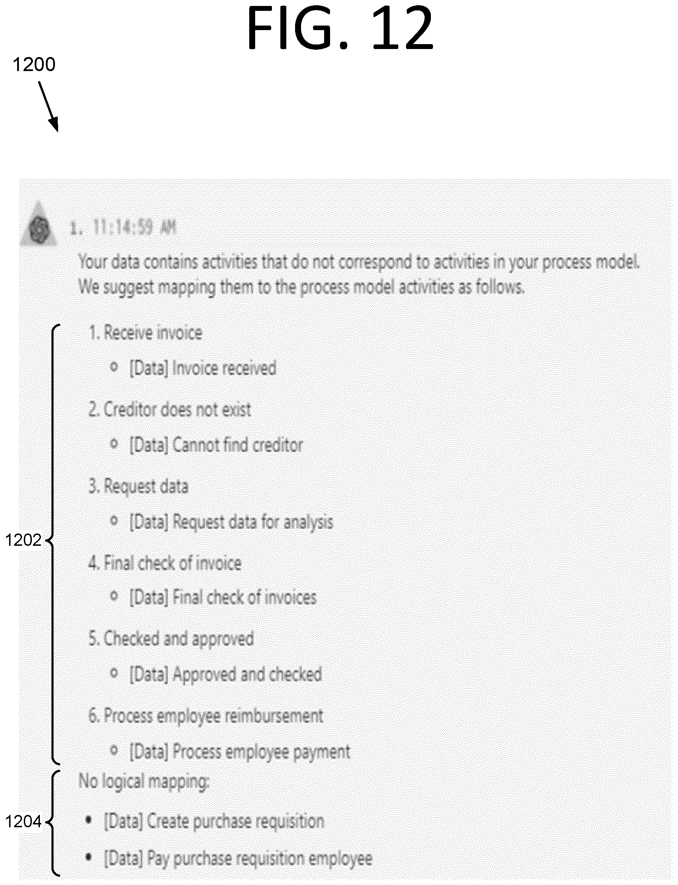

FIG. 12 shows an interface 1200 by which a large language model outputs a one-to-one mapping between the activities extracted from the process model and the activities executed during the one or more instances of execution, in accordance with one or more embodiments. Mapping 1202 is a one-to-one mapping whereby a single executed activity extracted from an event log is mapped to a single activity extracted from the process model. Indication 1204 indicates that no logical mappings are found for certain data activities.

Referring back to FIG. 5, at step 506, the mapping between the activities extracted from the process model and the activities extracted during the one or more instances of execution is output. For example, the mapping can be output by displaying the mapping on a display device of a computer system (e.g., display 125 of computing system 100 of FIG. 1), storing the mapping on a memory or storage (e.g., memory 115 of computing system 100 of FIG. 1) of a computer system, or by transmitting the mapping to a remote computer system.

Systems, methods, workflows, and processes described herein, including in FIGS. 3-5, may be performed by a computer program, encoding instructions for the processor(s) to perform at least part of the process(es) described in FIGS. 3-5, in accordance with embodiments of the present invention. The computer program may be embodied on a non-transitory computer-readable medium. The computer-readable medium may be, but is not limited to, a hard disk drive, a flash device, RAM, a tape, and/or any other such medium or combination of media used to store data. The computer program may include encoded instructions for controlling processor(s) of a computing system (e.g., processor(s) 110 of computing system 100 of FIG. 1) to implement all or part of FIGS. 3-5, which may also be stored on the computer-readable medium.

The computer program can be implemented in hardware, software, or a hybrid implementation. The computer program can be composed of modules that are in operative communication with one another, and which are designed to pass information or instructions to display. The computer program can be configured to operate on a general purpose computer, an ASIC, or any other suitable device.

It will be readily understood that the components of various embodiments of the present invention, as generally described and illustrated in the figures herein, may be arranged and designed in a wide variety of different configurations. Thus, the detailed description of the embodiments of the present invention, as represented in the attached figures, is not intended to limit the scope of the invention as claimed, but is merely representative of selected embodiments of the invention.

The features, structures, or characteristics of the invention described throughout this specification may be combined in any suitable manner in one or more embodiments. For example, reference throughout this specification to "certain embodiments," "some embodiments," or similar language means that a particular feature, structure, or characteristic described in connection with the embodiment is included in at least one embodiment of the present invention. Thus, appearances of the phrases "in certain embodiments," "in some embodiment," "in other embodiments," or similar language throughout this specification do not necessarily all refer to the same group of embodiments and the described features, structures, or characteristics may be combined in any suitable manner in one or more embodiments.

It should be noted that reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussion of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize that the invention can be practiced without one or more of the specific features or advantages of a particular embodiment. In other instances, additional features and advantages may be recognized in certain embodiments that may not be present in all embodiments of the invention.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention. In order to determine the metes and bounds of the invention, therefore, reference should be made to the appended claims.

## Claims

1. A computer-implemented method comprising:

   receiving one or more prompts defining 1) instructions and 2) activities executed during one or more instances of execution of a process;
   determining a mapping between one or more activities extracted from a process model of the process and one or more of the activities executed during the one or more instances of execution using a large language model based on the instructions; and
   outputting the mapping.

2. The computer-implemented method of claim 1, wherein the one or more prompts further define a textual description of the process model of the process, the method further comprising:
   extracting the activities extracted from the process model using the large language model based on the textual description of the process model and the instructions.

3. The computer-implemented method of claim 2, further comprising:
   translating a definition of the process model to the textual description of the process model.

4. The computer-implemented method of claim 1, wherein the one or more prompts further define the activities extracted from the process model of the process.

5. The computer-implemented method of claim 1, wherein determining a mapping between one or more activities extracted from a process model of the process and one or more of the activities executed during the one or more instances of execution using a large language model based on the instructions comprises:
   determining a one-to-one mapping between the one or more activities extracted from the process model and the one or more activities executed during the one or more instances of execution.

6. The computer-implemented method of claim 1, wherein determining a mapping between one or more activities extracted from a process model of the process and one or more of the activities executed during the one or more instances of execution using a large language model based on the instructions comprises:

determining at least one of a one-to-many mapping or a many-to-one mapping between the one or more activities extracted from the process model and the one or more activities executed during the one or more instances of execution.

7. The computer-implemented method of claim 1, wherein determining a mapping between one or more activities extracted from a process model of the process and one or more of the activities executed during the one or more instances of execution using a large language model based on the instructions comprises at least one of:

determining at least one of the activities extracted from the process model that do not map to at least one of the activities executed during the one or more instances of execution; and
determining at least one of the activities executed during the one or more instances of execution that do not map to at least one of the activities extracted from the process model.

8. The computer-implemented method of claim 1, wherein the process is an RPA (robotic process automation) workflow executed by one or more RPA robots.

9. A system comprising:

a memory storing computer program instructions; and
at least one processor configured to execute the computer program instructions, the computer program instructions configured to cause the at least one processor to perform operations of:

receiving one or more prompts defining 1) instructions and 2) activities executed during one or more instances of execution of a process;
determining a mapping between one or more activities extracted from a process model of the process and one or more of the activities executed during the one or more instances of execution using a large language model based on the instructions; and
outputting the mapping.

10. The system of claim 9, wherein the one or more prompts further define a textual description of the process model of the process, the operations further comprising:
extracting the activities extracted from the process model using the large language model based on the textual description of the process model and the instructions.

11. The system of claim 10, the operations further comprising:
translating a definition of the process model to the textual description of the process model.

12. The system of claim 9, wherein the one or more prompts further define the activities extracted from the process model of the process.

13. The system of claim 9, wherein determining a mapping between one or more activities extracted from a process model of the process and one or more of the activities executed during the one or more instances of execution using a large language model based on the instructions comprises:
determining a one-to-one mapping between the one or more activities extracted from the process model and the one or more activities executed during the one or more instances of execution.

14. The system of claim 9, wherein determining a mapping between one or more activities extracted from a process model of the process and one or more of the activities executed during the one or more instances of execution using a large language model based on the instructions comprises:
determining at least one of a one-to-many mapping or a many-to-one mapping between the one or more activities extracted from the process model and the one or more activities executed during the one or more instances of execution.

15. A non-transitory computer-readable medium storing computer program instructions, the computer program instructions, when executed on at least one processor, cause the at least one processor to perform operations comprising:

receiving one or more prompts defining 1) instructions and 2) activities executed during one or more instances of execution of a process;

determining a mapping between one or more activities extracted from a process model of the process and one or more of the activities executed during the one or more instances of execution using a large language model based on the instructions; and
outputting the mapping.

# FIG. 1

100

# FIG. 2A

200

# FIG. 2B

# FIG. 3

300

XAML RPA Workflows
Labeled Screens
Semantic Associations — 310

Train AI/ML
Model — 320

Review Results — 330

Supplement
Training Data and/
or Modify Reward
Function — 350

NO ← Threshold
Met? — 340

YES

Test on
Evaluation
Data — 360

NO — Threshold
Met? — 370

Deploy AI/ML
Model — 380 ← YES

# FIG. 4

500

# FIG. 5

Receive one or more prompts defining 1) instructions and 2) activities executed during one or more instances of execution of a process
502

Determine a mapping between one or more activities extracted from a process model of the process and one or more of the activities executed during the one or more instances of execution using a large language model based on the instructions
504

Output the mapping
506

# FIG. 6

600

Give the list of activities in the users process definition. Omit (optional) annotations. This list of activities is called "user activities".

602

# FIG. 7

700

702 {
Now consider the following list of activities called "data activities". Map each of the "data activities" below to the "user activities".
Multiple "data activities" may map to a single "user activity". If there is no logical mapping, indicate so for the "data activity" Structure
the mapping per "user activity".

Data activities:
-Receive the invoice
-Cannot find creditor
-Check received invoice
-Request data for analysis
-Check contract conditions
-Repeat payment process
-Final check of invoices
-Approve invoice
-Checked and approved
-Pay invoice
-Clarify deviant invoice
-Post-process invoice
-Pay employee reimbursement
-Process employee payment
-Invoice received

704 {
-Process employee reimbursement
-Receive invoice
-Final check of invoice
-Approved and checked
-Create purchase requisition
-Pay purchase requisition employee
-Produce invoice
-Pay invoice repeat
-Inspect invoice received
-Test for fraud
-Payment employee reimbursement
-Recieve invoice
-Deceive invoice
-Payment process again
-Contact check regarding conditions
-Explain invoice deviation
-Send invoice back

800

```
The user's process is defined by the following:
do the following in sequence:
        Activity: "Receive invoice" that cannot be repeated.
        do only one of the following Exclusively:
                do the following in sequence:
                        Optionally, Activity: "Creditor does not exist" that cannot be repeated.
                        Activity: "Check received invoice" that cannot be repeated.
                        do only one of the following Exclusively:
                                do the following in sequence:
                                        Activity: "Request data" that cannot be repeated.
                                        do only one of the following Exclusively:
                                                Activity: "Check contract conditions" that cannot be repeated.
                                                Activity: "Repeat payment process" that cannot be repeated.
                                        Activity: "Final check of invoice" that cannot be repeated.
                                        Activity: "Approve invoice" that cannot be repeated.
                                Activity: "Checked and approved" that cannot be repeated.
                        Perform a loop in which we must always first do: Activity: "Pay invoice" that cannot be repeated.
                        and then we can either exit the loop and continue, or we can repeat the loop by first doing the following: Activity: "Clarify deviant invoice" that cannot be repeated.
                do the following in sequence:
                        Optionally, Activity: "Post-process invoice" that cannot be repeated.
                        Perform a loop in which we must always first do: Activity: "Pay employee reimbursement" that cannot be repeated.
                        and then we can either exit the loop and continue, or we can repeat the loop by first doing the following: Activity: "Process employee reimbursement" that cannot be repeated.
```

# FIG. 8

# FIG. 9

900

1. Receive invoice
2. Creditor does not exist
3. Check received invoice
4. Request data
5. Check contract conditions
6. Repeat payment process
7. Final check of invoice
8. Approve invoice
9. Checked and approved
10. Pay invoice
11. Clarify deviant invoice
12. Post-process invoice
13. Pay employee reimbursement
14. Process employee reimbursement

902

1000

# FIG. 10

1. Receive invoice
   - Receive the invoice
   - Invoice received
   - Receive invoice
   - Recieve invoice
   - Deceive invoice
2. Creditor does not exist
   - Cannot find creditor
3. Check received invoice
   - Check received invoice
   - Inspect invoice received
4. Request data
   - Request data for analysis
5. Check contract conditions
   - Check contract conditions
   - Contact check regarding conditions
6. Repeat payment process
   - Repeat payment process
   - Pay invoice repeat
   - Payment process again
7. Final check of invoice
   - Final check of invoices
   - Final check of invoice
   - Test for fraud
8. Approve invoice
   - Approve invoice
9. Checked and approved
   - Checked and approved
   - Approved and checked
10. Pay invoice
    - Pay invoice
11. Clarify deviant invoice
    - Clarify deviant invoice
    - Explain invoice deviation
    - Send invoice back
12. Post-process invoice
    - Post-process invoice
13. Pay employee reimbursement
    - Pay employee reimbursement
    - Payment employee reimbursement
14. Process employee reimbursement
    - Process employee payment
    - Process employee reimbursement

⟩1002

No logical mapping:

* Create purchase requisition
* Pay purchase requisition employee
* Produce invoice

⟩1004

# FIG. 11

1100

1. Receive invoice.
   o Invoice received.
2. Creditor does not exist.
   o Cannot find creditor.
3. Request data
   o Request data for analysis
4. Final check of invoice
   o Final check of invoices
5. Checked and approved.
   o Approved and checked.
6. Process employee reimbursement
   o Process employee payment

} 1102

No logical mapping:
- Create purchase requisition.
- Pay purchase requisition employee.

} 1104

# FIG. 12

1200

1. 11:14:59 AM

Your data contains activities that do not correspond to activities in your process model. We suggest mapping them to the process model activities as follows.

1202

1. Receive invoice

   ○ [Data] Invoice received

2. Creditor does not exist

   ○ [Data] Cannot find creditor

3. Request data

   ○ [Data] Request data for analysis

4. Final check of invoice

   ○ [Data] Final check of invoices

5. Checked and approved

   ○ [Data] Approved and checked

6. Process employee reimbursement

   ○ [Data] Process employee payment

No logical mapping:

1204

- [Data] Create purchase requisition

- [Data] Pay purchase requisition employee

Europäisches
Patentamt

European
Patent Office

Office européen
des brevets

# EUROPEAN SEARCH REPORT

Application Number

EP 24 20 2735

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 562 807 A (IFLYTEK CO LTD) 8 August 2023 (2023-08-08) * paragraphs [0087], [0089] * * paragraphs [0139] - [0144], [0151] - [0153] * | 1-15 | INV. G05B19/042 G06F8/35 G06N20/00 G06Q10/0633 |
| X | CN 116 775 183 A (TENCENT TECH SHENZHEN CO LTD) 19 September 2023 (2023-09-19) * paragraph [0085] * | 1,9,15 | |
| X | WO 2023/059346 A1 (UIPATH INC [US]) 13 April 2023 (2023-04-13) * paragraphs [0006], [0025], [0104], [0114], [0132] * | 1,9,15 | |

TECHNICAL FIELDS
SEARCHED      (IPC)

G05B
G06N
G06Q
G06F

The present search report has been drawn up for all claims

| Place of search | Date of completion of the search | Examiner |
|---|---|---|
| Munich | 11 February 2025 | Frank, Mario |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 2735

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2025

| Patent document cited in search report | | Publication date | Patent family member(s) | | Publication date |
|---|---|---|---|---|---|
| CN 116562807 | A | 08-08-2023 | NONE | | |
| CN 116775183 | A | 19-09-2023 | CN | 116775183 A | 19-09-2023 |
| | | | WO | 2024244271 A1 | 05-12-2024 |
| WO 2023059346 | A1 | 13-04-2023 | CN | 116235215 A | 06-06-2023 |
| | | | EP | 4186011 A1 | 31-05-2023 |
| | | | JP | 2024539525 A | 29-10-2024 |
| | | | KR | 20230051031 A | 17-04-2023 |
| | | | US | 2023108015 A1 | 06-04-2023 |
| | | | US | 2023112414 A1 | 13-04-2023 |
| | | | US | 2023125223 A1 | 27-04-2023 |
| | | | WO | 2023059346 A1 | 13-04-2023 |

EPO FORM P0459

For more details about this annex : see Official Journal of the European Patent Office, No. 12/82